Europäisches Patentamt

European Patent Office

Office européen des brevets

Publication number: **0 288 049**

**A1**

## EUROPEAN PATENT APPLICATION

Application number: 88106387.9

Int. Cl.4: **G01L 3/10**

Date of filing: 21.04.88

Priority: 24.04.87 SE 8701683

Date of publication of application:
26.10.88 Bulletin 88/43

Designated Contracting States:
**DE FR GB IT**

Applicant: **ASEA BROWN BOVERI AB**

**S-721 83 Västeras(SE)**

Inventor: **Sobel, Jarl**
**Siggesborgsgatan 5 D,**
**S-722 26 Vaesteras(SV)**

Representative: **Boecker, Joachim, Dr.-Ing.**
**Rathenauplatz 2-8**
**D-6000 Frankfurt a.M. 1(DE)**

### Magnetoelastic torque transducer.

Magnetoelastic torque transducer with a measuring axle (5) provided with a rigidly attached, concentric measuring sleeve (1) of magnetic material with two parallel annular measuring zones (2,3), which are located at some distance away from each other and are provided with parallel slits with an even pitch making an angle of +45° and -45°, respectively, with the generatrix of the measuring sleeve. The measuring axle is concentrically surrounded by a stationary magnetic core (6) comprising windings (12,13,14,15) for excitation of said measuring zones and for sensing of the flux difference between the measuring zones, said flux difference being proportional to the torque. According to the invention the measuring sleeve is brazed to a supporting sleeve (4) of a material having essentially the same coefficient of expansion as the measuring sleeve. The supporting sleeve has free attachment ends outside the measuring sleeve for rigid attachment to the measuring axle by means of welding or brazing with induction heating. To additionally reduce undesirable stresses in the strips, the slits of the measuring sleeve are filled with a non-magnetic brazing alloy.

## Magnetoelastic torque transducer

The invention relates to a magnetoelastic torque transducer according to the precharacterising part of Claim 1. A torque transducer of this kind is known from the US-A-4, 506,554. Such transducers are used for contactless torque measurement in a stationary or rotating axle.

For attaching the measuring sleeve to the measuring axle, the US-A-4,506,554 describes two different solutions, namely (a) soldering over the entire length of the sleeve, and (b) welding to the ends of the measuring sleeve to the measuring axle only, whereby the axle is possibly turned down below the measuring zones.

To prevent magnetic disturbances from being transmitted into the transducer via the measuring axle, the axle should normally be made of non-magnetic austenitic steel. However, austenitic steel has an approximately 50% higher coefficient of expansion than magnetic ferritic steel, from which the measuring sleeve is made. Since brazing according to the above alternative (a) must be carried out using a high temperature brazing alloy, very high compressive stresses are obtained in the measuring sleeve after cooling. These com pressive stresses cause magnetoelastic saturation and also reduce the overload capacity of the transducer.

When using a method of attachment according to the above alternative (b), that is welding at the ends of the measuring sleeve only, no appreciable residual stresses are obtained in the measuring sleeve in the case of rapid welding. When loading the axle with a torque, on the other hand, such great bending stresses arise in the curved strips between the slits that both magnetoelastic saturation and deformation of the strips occur, at least at great overloads.

The invention aims at developing a magnetoelastic torque transducer of the above-mentioned kind, which suffers, in comparison to the afore-mentioned previous torque transducers, less from residual stresses an exhibits an increased overload capacity.

To achieve this aim the invention suggests a magnetoelastic torque transducer according to the introductory part of Claim 1, which is characterized by the features of the characterizing part of Claim 1.

Further developments of the invention are characterized by the features of the additional claims.

According to the invention the measuring sleeve is brazed to a supporting sleeve which is somewhat longer than the measuring sleeve and of the same material as the measuring sleeve or a different material having essentially the same coefficient of expansion. In this way, no significant residual stresses are obtained after cooling. The supporting sleeve is to have free attachment ends outside the measuring sleeve for rigid attachment to the measuring axle. By means of rapid welding or brazing with induction heating, this attachment can be achieved with very slight heating of the composite sleeve, so that no significant residual stresses result.

The considerable bending stresses in the free curved strips between the slits, arising when the axle is subjected to torque, are, of course, greatly reduced by the supporting sleeve, approximately proportionally to the wall thickness of the supporting sleeve.

According to a further development of the invention, the slits in the measuring zones are filled up with a brazing alloy to further reduce undesirable stresses, for the slits in the measuring zones reduce the area and hence the maximally allowed overload. However, the greatest influence is exerted by the stress concentrations at the ends of the slits. Both of these effects are eliminated by filling up the slits preferably completely with a non-magnetic brazing alloy which has essentially the same coefficient of elasticity and coefficient of expansion as the measuring sleeve. This results in a measuring sleeve which, from a mechanical point of view, practically behaves like a homogeneous cylinder, whereby the overload capacity is increased to a considerable extent. At the same time the advantage is gained that the strips in the measuring zones are hereby subjected to the two principal stresses of the torsional stress, which increases the magnetic sensitivity.

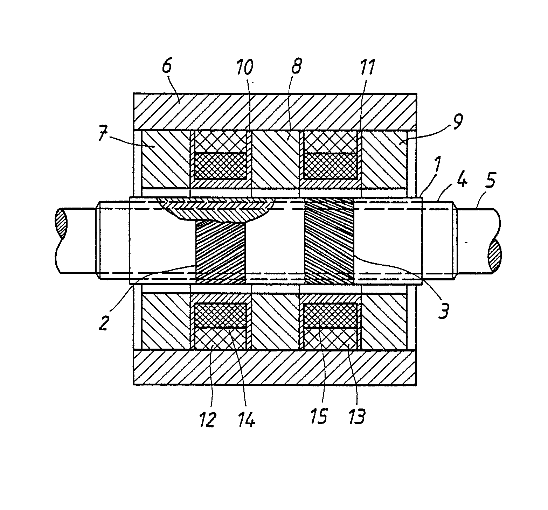

The invention will now be described in greater detail with reference to the accompanying drawing showing - by way of example - a longitudinal section through an embodiment of a torque transducer according to the invention. The measuring sleeve is brazed to a supporting sleeve, which in turn is welded to the measuring axle. Around the measuring sleeve an iron core with excitation and measuring windings is arranged.

In the figure the measuring sleeve 1 is formed with two parallel measuring zones 2,3 spaced apart from each other at some distance and provided with parallel slits making an angle of +45° and -45°, respectively, with the generatrix of the measuring sleeve 1. The measuring sleeve 1 is attached to a supporting sleeve 4 by means of brazing. The supporting sleeve 4 is somewhat longer than the measuring sleeve 1, and the projecting end portions of the supporting sleeve 4 are attached to the measuring axle 5 by means of welding or induction soldering with a hard solder. The measuring sleeve 1 is surrounded by a magnetic core 6 in the form of a solid of revolution with an E-shaped generating surface and with an air gap between the measuring sleeve 1 and the three pole-forming annular parts 7,8,9 of the core. The magnetic core 6 surrounds two spaces 10,11 accommodating two series-connected windings 12,13 for excitation of the measuring zones 2,3 and two windings 14,15, connected in series but oppositely with respect to the voltages included in the windings 12,13, for sensing of the flux difference between the measuring zones 2,3, which flux difference is proportional to the torque. This flux difference is caused by the fact that the strips between the slits in one measuring zone are subjected to tensile stress and in the other measuring zone to compressive stress when the axle is loaded with a torque.

## Claims

1. Magnetoelastic torque transducer with a measuring axle (5) provided with a rigidly attached, concentric measuring sleeve (1) of magnetic material with two parallel annular measuring zones (2,3), which are located at some distance away from each other and are provided with parallel slits with an even pitch making an angle of +45° and -45°, respectively, with the generatrix of the measuring sleeve, the measuring axle being concentrically surrounded by a stationary magnetic core (6) comprising windings (12,13,14,15) for excitation of said measuring zones and for sensing of the flux difference between the measuring zones, said flux difference being proportional to the torque, **characterized** in that the measuring sleeve is brazed to a supporting sleeve (4) of a material having essentially the same coefficient of expansion as the measuring sleeve and that the supporting sleeve has free attachment ends outside the measuring sleeve for rigid attachment to the measuring axle by means of welding or brazing with induction heating.

2. Magnetoelastic torque transducer according to Claim 1, **characterized** in that the slits of the measuring sleeve are partially or entirely filled with a non-magnetic brazing alloy having essentially the same coefficient of expansion as that of the measuring sleeve.

April 14, 1988
22 026 PE

# EUROPEAN SEARCH REPORT

European Patent Office

Application number

EP 88106387.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 506 554 (BLOMKVIST ET AL) | | G 01 L 3/10 |
| A | US-A-3 465 581 (R HOHENBERG) *column 2 line 55 - line 71 figure 3* | | |
| A | US-A-2 432 900 (A M JACOBSEN) *column 2 line 46-51 figure 1* | | |
| A | GB-A-1 369 404 (HITACHI LTD) | | |
| A | PATENT ABSTRACTS OF JAPAN, vol 9, no 167 (P-372), JP-A-60-42628 (TOSHIBA K.K.) 03rd June 1985 | | |

TECHNICAL FIELDS
SEARCHED (Int. Cl.4)

G 01 B
G 01 L

The present search report has been drawn up for all claims

| Place of search | Date of completion of the search | Examiner |
|---|---|---|
| STOCKHOLM | 29 -06-1988 | JAKOBSSON L. |